Europäisches Patentamt

European Patent Office

Office européen des brevets

(11) Numéro de publication: **0 147 327**
**B1**

**FASCICULE DE BREVET EUROPEEN**

(45) Date de publication du fascicule du brevet: **12.10.88**

(21) Numéro de dépôt: **84402708.6**

(22) Date de dépôt: **21.12.84**

(51) Int. Cl.⁴: **B 01 J 2/08, C 01 F 7/02,**
**C 01 G 25/02, C 04 B 35/00,**
**C 01 G 27/02, C 01 G 23/047**

(54) Procédé de préparation d'une poudre apte au frittage.

(30) Priorité: **29.12.83 FR 8321022**

(43) Date de publication de la demande:
**03.07.85 Bulletin 85/27**

(45) Mention de la délivrance du brevet:
**12.10.88 Bulletin 88/41**

(84) Etats contractants désignés:
**BE CH DE FR GB IT LI NL**

(56) Documents cités:
**EP-A-0 073 120**
**EP-A-0 097 539**
**FR-A-1 492 326**
**FR-A-1 576 728**
**FR-A-2 077 367**
**US-A-3 986 978**
**US-A-4 098 874**

(73) Titulaire: **COMMISSARIAT A L'ENERGIE**
**ATOMIQUE**
**31/33, rue de la Fédération**
**F-75015 Paris (FR)**

(72) Inventeur: **Braun, Camille**
**Impasse Le Goulet Saint-Nizier du Moucherotte**
**F-38250 Villard-de-Lans (FR)**
Inventeur: **de Neve, Michel**
**2, Chemin de la Ville**
**F-38240 Meylan (FR)**

(74) Mandataire: **Mongrédien, André et al**
**c/o BREVATOME 25, rue de Ponthieu**
**F-75008 Paris (FR)**

## Description

La présente invention a pour objet un procédé de préparation d'une poudre sous forme de grains particulièrement bien adaptés au frittage, notamment en vue de réaliser des pièces de grandes dimensions à propriétés mécaniques renforcées.

Il est connu de substituer des pièces réfractaires en alumine ou à base d'alumine, par exemple, à des parties métalliques dans des ensembles mécaniques travaillant à haute température, c'est-à-dire à des températures supérieures à 1000°C, ce qui est le cas des moteurs thermiques. Par comparaison avec d'autres céramiques réfractaires, l'alumine ou les composites à base d'alumine ont l'avantage d'avoir une bonne résistance aux chocs thermiques. De plus, leur résistance à la flexion est améliorée si on réalise une microdispersion de zircone dans une alumine elle-même finement divisée: cette résistance passe ainsi de 200 MPa à 350 MPa, cet effet étant obtenu quand les cristallites ont une dimension n'excédant pas quelques microns.

L'alumine ou les composites à base d'alumine sont mis en forme de manière classique selon le processus industriel suivant:

1. traitement préliminaire de la poudre;
2. compression d'une ébauche crue;
3. traitement thermique et frittage naturel;
4. mise aux cotes.

Le passage par une ébauche comprimée crue au plus près des cotes définitives est indispensable si l'on désire réaliser industriellement des pièces denses de grandes dimensions et de géométrie compliquée. C'est donc la capacité à réaliser de telles pièces crues qui commande la faisabilité de l'ensemble du processus. Or, à l'heure actuelle, les ébauches crues n'ont pas une solidité suffisante pour que l'on puisse réaliser industriellement autre chose que de petits objets de forme simple. Une telle situation handicape gravement la substitution de pièces métalliques travaillant à haute température par des céramiques à base d'alumine, surtout dans le cas de pièces de grandes dimensions et de forme compliquée, malgré les excellentes performances qu'on peut attendre de l'alumine.

Ces difficultés viennent essentiellement de ce que la microcristallisation nécessaire pour réaliser le renforcement mécanique de la pièce ne peut être obtenue qu'en frittant le comprimé à une température inférieure ou égale à 1500°C. Ceci ne peut être obtenu qu'avec des poudres broyées extrêmement fines agglomérées qui, du fait du broyage, sont sans cohésion et donc impropres à l'agglomération: la granulation de la poudre par compression et concassage est inopérante du fait du manque de cohésion intrinsèque des granulés.

Le document FR—A—1 576 728 décrit un procédé de fabrication de sphères calibrées par la méthode sol-gel selon laquelle on soumet la solution d'alimentation à des vibrations soniques d'amplitude et de fréquence déterminées.

Le document EP—A—0 073 120 décrit un procédé de revêtement d'un substrat par au moins un oxyde réfractaire à partir d'une dispersion d'une poudre dans un milieu liquide suivi d'une calcination, la dispersion étant formée à partir de deux précurseurs solides ou liquides purifiables.

La présente invention a justement pour objet d'éliminer les inconvénients ci-dessus grâce à un procédé qui permet d'obtenir une poudre ayant une bonne cohésion, ce qui la rend apte à la mise en forme sans pour autant nuire à sa capacité de densification.

Plus précisément, la présente invention a pour objet un procédé de préparation d'une poudre apte à la compre'ssion et au frittage qui comprend les étapes de formation d'une émulsion, de fractionnement de ladite émulsion sous forme de microgouttelettes que l'on fige puis qu'on sèche et traite thermiquement, caractérisé en ce que l'émulsion est formée d'au moins une poudre contenant au moins un constituant de la poudre à précurseur d'au moins un autre constituant de la poudre à préparer.

Le procédé s'applique à des poudres d'oxydes métalliques, en particulier l'alumine, la zircone, l'oxyde de titane et l'oxyde de hafnium, pris seuls ou en mélange.

L'invention s'applique particulièrement bien pour traiter de la poudre d'alumine de surface spécifique supérieure ou égale à 5 m²/g. Selon l'invention, la poudre, notamment un oxyde métallique, est mise en suspension dans une solution d'un sel minéral dont le cation est un élément constitutif (précurseur) de la poudre à préparer, par exemple un sel d'aluminium. Le ou les sels minéraux formant le précurseur sont un des constituants de la poudre à préparer, par exemple alumine-sel de zirconium. Cette suspension est émulsionnée dans un liquide organique puis est fractionnée. Le fractionnement de l'émulsion sous forme de microgouttelettes peut s'effectuer par tout procédé connu tel que pulvérisation pneumatique, effet centrifuge, etc.

De préférence et selon un mode de réalisation préféré de l'invention, le fractionnement s'effectue au moyen d'une sonde ultrasonore, creuse, non immergée.

Immédiatement après le fractionnement les microgouttelettes produites sont figées par tout procédé connu (déshydratation, précipitation chimique, lyophilisation, etc.).

Les petites sphères obtenues après cette dernière étape sont ensuite traitées thermiquement: le sel précurseur doit être choisi pour sa capacité à se décomposer partiellement à basse température, c'est-à-dire aux environs de 150 à 200°C. A ce stade du processus, le précurseur donne des sels basiques fortement hydroxylés qui figent les gouttelettes dans la forme sphérique. Une calcination effectuée à une température comprise entre 700 et 800°C transforme ces sels en sphères d'oxydes.

Le sel minéral utilisé comme précurseur doit se décomposer à basse température tout en gardant la cohésion de l'ensemble et ne doit laisser après calcination aucun résidu anionique tel que le chlore, le soufre ou le carbone, qui pourrait contrarier la densification. Pour la même raison, la proportion de précurseur doit être minimale. Dans le cadre de l'invention, les précurseurs utilisés de préférence sont les sels carboxylés d'aluminium, de zirconium, de titane, de hafnium et, de façon plus générale, de tout cation dont l'oxyde intervient comme élément de structure de la poudre à réaliser. L'acétate est le plus simple à mettre en oeuvre, mais les oxalates et les citrates donnent également de bons résultats.

L'invention apparaîtra mieux à la lecture de la description qui va suivre, donnée à titre purement illustratif et nullement limitatif, de quelques exemples de réalisation de poudre suivant le procédé objet de l'invention.

On va tout d'abord donner quelques exemples de préparation de suspensions émulsionnées en milieu hydro-organique, plus spécialement dans le cas de l'alumine éventuellement additionnée de zircone.

### Exemple 1

Préparation d'une émulsion d'alumine additionnée de molybdène.

On dissout 2 g d'oxyde de molybdène $MoO_3$ dans un volume de liquide obtenu en mélangeant 10 cm³ d'acide acétique, 21 cm³ d'ammoniaque concentré et 30 cm³ d'eau. On ajoute ensuite 30 g d'alumine α. La suspension est ensuite dispersée dans un volume égal de kérosène dans lequel on peut éventuellement ajouter un mouillant pour stabiliser l'émulsion. Ce dernier peut être, par exemple, le produit vendu sous le nom de "Span 60" par la Société Koch Light Laboratories, ajouté dans la proportion de 1% dans l'exemple décrit ici. Dans cet exemple, les quantités d'oxyde de molybdène $MoO_3$ peuvent être augmentées d'un facteur de 5 à condition d'augmenter dans le même rapport les quantités d'acide acétique et d'ammoniaque. La dispersion se fait toujours dans un volume égal de kérosène mais, dans ce cas, l'addition de produit mouillant n'est plus nécessaire.

### Exemple 2

Préparation d'une émulsion d'alumine stabilisée à la zircone.

On dissout 84,5 g de diacétate de zirconium dans 500 cm³ d'eau et on y ajoute après dissolution 168 g d'alumine α. L'émulsion se fait ensuite dans un volume égal de kérosène.

La préparation d'alumine stabilisée à la zircone peut également se faire avec, comme précurseur, du carbonate basique de zirconium. Par exemple, on prélève 50 cm³ d'acide acétique concentré que l'on dilue à 100 cm³. On y ajoute, par fractions, 100 g de carbonate basique de zirconium. On chauffe sous agitation à une température voisine de 80°C pour obtenir une solution claire. On ajoute ensuite 40 g d'alumine α et on effectue une nouvelle dispersion. La suspension obtenue est prête à être émulsionnée par un volume égal de kérosène.

### Exemple 3

Préparation d'une poudre de titanate d'aluminium $Al_2TiO_5$.

Dans 380 cm³ d'eau, on dissout 93,2 g d'oxalate double de titane et d'ammonium. Dans cette solution, on disperse 51 g d'alumine γ. On agite et on chauffe jusqu'à une température de l'ordre de 50°C, ce qui donne un composé gélatineux $Al_2O_3$, $xH_2O$ qu'on laisse déposer pendant une heure environ. On émulsionne ensuite cette phase par 135 cm³ de kérosène en présence de 0,4 cm³ environ d'un produit mouillant, qui peut être par exemple celui vendu sous le nom de "Triton X 405" par la Société B.D.H. Chemicals Ltd, Poole, England. Si l'on désire stabiliser le réseau de titanate d'aluminium avec de la silice, il faut ajouter la quantité nécessaire de poudre de silice colloïdale avant d'introduire la poudre d'alumine.

Après avoir décrit la préparation de l'émulsion, on va décrire maintenant la deuxième étape du procédé objet de l'invention qui consiste à fractionner les émulsions obtenues à la première étape afin d'obtenir des grains sphériques. Dans le mode de réalisation préféré, les émulsions dont la préparation a été décrite au cours des six exemples ci-dessus sont pulvérisées à l'aide d'une sonde ultrasonique à tête creuse, non immergée et immédiatement projetées dans du kérosène maintenu à 170°C environ pour en assurer la dessication. L'appareillage utilisé est un ballon de contenance 4 l, thermorégulé et équipé de deux réfrigérateurs pour la condensation de la phase aqueuse évaporée ainsi que d'une tête ultrasonique creuse, non immergée. L'ensemble est maintenu sous agitation giratoire pendant toute la durée de l'essai. Comme les grains sont sphériques, ils conviennent bien pour l'écoulement lorsqu'ils sont destinés à l'alimentation automatique des presses de mise en forme ou à l'alimentation d'un chalumeau à plasma.

En variante de cette deuxième étape, les émulsions réalisées dans les exemples 1 à 5 peuvent être fractionnées de la même manière que ci-dessus (sonde ultrasonique) et projetées immédiatement dans un alcool saturé en ammoniac gazeux à la température ambiante pour être figées par précipitation chimique.

Les sphéroïdes obtenus par les moyens décrits ci-dessus sont ensuite traités (lavage, rinçage, ...). Ces particules sphériques sont, après séchage, calcinées à une température déterminée pour conduire aux poudres désirées.

Les produits obtenus peuvent être séchés:
— en lit stratifié
— en lit fluidisé à air chaud, ou
— par entraînement azéotropique au propanol.

Les températures de calcination peuvent être réduites pour les poudres préparées à partir de nitrates, si nécessaire. D'autre part, l'agglomération des sphéroïdes de petit diamètre (<60 μm) peut être réduite à condition de tamiser à la maille 250 μm les oxydes séchés vers 50 à 70°C (produit pour chalumeau à plasma).

Ainsi, le procédé objet de l'invention offre des avantages particulièrement intéressants, puis qu'il permet, à partir d'une poude peu apte au frittage ou à partir de composés pouvant donner cette poudre, de préparer des grains ayant une excellente cohésion et pouvant donc subir sans problème des opérations de densification et de frittage.

On a pu constater que les comprimés obtenus à partir de l'émulsion de l'exemple 3 étaient densifiables à plus de 95% de la densité théorique par frittage naturel à une température ne dépassant pas 1550°C, les pièces frittées ayant une taille de cristallites de l'ordre du micron. On a également constaté que la résistance à la flexion de ces pièces frittées était égale ou supérieure à 350 MPa.

Enfin, il est bien entendu que l'invention ne se limite pas aux seuls exemples qui viennent d'être décrits, mais qu'elle s'applique à la fabrication de nombreux oxydes mixtes. Si certains exemples concernent l'élaboration d'oxydes mixtes avec deux constituants (zircone yttriée ou alumine stabilisée à la zircone), l'invention s'applique aussi bien à la réalisation de composés ternaires tels que:

— $SiO_2$, $Al_2O_3$, MO, M étant un métal bivalent,
— $Al_2O_3$, $Li_2O$, MgO éventuellement ensemencé de $TiO_2$,
— $SiO_2$, $B_2O_3$, $Na_2O$

ou encore à la réalisation de composés quaternaires comme les céramiques ferromagnétiques, par exemple: NiO, ZnO, CuO, $Fe_2O_3$.

## Revendications

1. Procédé de préparation d'une poudre apte à la compression et au frittage, ce procédé comprenant les étapes de formation d'une émulsion, de fractionnement de ladite émulsion sous forme de microgouttelettes que l'on fige puis qu'on sèche et traite thermiquement, caractérisé en ce que l'émulsion est formée d'au moins une poudre contenant au moins un constituant de la poudre à préparer en suspension dans une solution d'un composé précurseur d'au moins un autre constituant de la poudre à préparer.

2. Procédé selon la revendication 1, caractérisé en ce que ladite poudre contenant au moins un constituant de la poudre à préparer est choisie dans le groupe constitué par: l'alumine, la zircone, l'oxyde de titane et l'oxyde de hafnium.

3. Procédé selon la revendication 2, caractérisé en ce que ladite poudre contenant au moins un constituant de la poudre à préparer est de l'alumine de surface spécifique supérieure à 5 m²/g.

4. Procédé selon l'une quelconque des revendications 1 à 3, caractérisé en ce que ledit composé précurseur est un sel choisi parmi les acétates, les oxalates et les nitrates.

## Patentansprüche

1. Verfahren zur Herstellung von zum Komprimieren und Sintern geeignetem Pulver, wobei dieses Verfahren die Schritte umfaßt, eine Emulsion zu bilden, die genannte Emulsion in der Form von Mikrotropfen zu zerteilen, die man fest werden läßt, dann trocknet und wärmebehandelt, dadurch gekennzeichnet, daß die Emulsion von wenigstens einem Pulver, welches wenigstens einen Bestandteil des herzustellenden Pulvers enthält, als Suspension in einer Lösung einer Zwischenstoffverbindung von wenigstens einem anderen Bestandteil des herzustellenden Pulvers gebildet wird.

2. Verfahren nach Anspruch 1, dadurch gekennzeichnet, daß das genannte Pulver, welches wenigstens einen Bestandteil des herzustellenden Pulvers enthält, aus der von Aluminium, Zirkonium, Titanoxid und Hafniumoxid gebildeten Gruppe ausgewählt ist.

3. Verfahren nach Anspruch 2, dadurch gekennzeichnet, daß das genannte Pulver, welches wenigstens einen Bestandteil des herzustellenden Pulvers enthält, Aluminium mit einer Oberflächenkennzahl größer als 5 m²/g ist.

4. Verfahren nach irgendeinem der Ansprüche 1 bis 3, dadurch gekennzeichnet, daß die genannte Zwischenstoffverbindung ein unter den Acetaten, den Oxalaten und den Nitraten ausgewähltes Salz ist.

## Claims

1. Process for the preparation of a powder suitable for compression and fritting, the process comprising the stages of forming an emulsion, fractionating the said emulsion in the form of microdroplets, which are fixed and then dried, followed by heat treatment, characterized in that the emulsion is formed by at least one powder containing at least one constituent of the powder to be prepared in suspension in a solution of a precursor compound of at least one other constituent of the powder to be prepared.

2. Process according to Claim 1, characterized in that the powder containing at least one constituent of the powder to be prepared is chosen from the group constituted by alumina, zirconium dioxide, titanium dioxide and hafnium oxide.

3. Process according to Claim 2, characterized in that said powder containing at least one constituent of the powder to be prepared is alumina with a specific surface greater than 5 m²/g.

4. Process according to any one of the Claims 1 to 3, characterized in that said precursor compound is a salt chosen from among acetates, oxilates and nitrates.